# EUROPEAN PATENT SPECIFICATION

(11) **EP 3 833 101 B1**
(45) Date of publication and mention of the grant of the patent: **09.08.2023**
(21) Application number: 19855150.9
(22) Date of filing: 19.08.2019
(51) Int. Cl.: H04W 36/00

(54) **UI DISPLAY METHOD AND APPARATUS, AND TERMINAL DEVICE**
VERFAHREN UND VORRICHTUNG ZUR ANZEIGE EINER BENUTZERSCHNITTSTELLE UND ENDGERÄT
PROCÉDÉ ET APPAREIL D'AFFICHAGE D'INTERFACE UTILISATEUR, ET DISPOSITIF TERMINAL

(30) Priority: 29.08.2018 CN 201810996370
(43) Date of publication of application: 09.06.2021
(73) Proprietor: GUANGDONG OPPO MOBILE TELECOMMUNICATIONS CORP., LTD., Dongguan Guangdong 523860 (CN)
(72) Inventor: XIA, Yang, Dongguan, Guangdong 523860 (CN); ZHANG, Tao, Dongguan, Guangdong 523860 (CN); TANG, Kai, Dongguan, Guangdong 523860 (CN)
(74) Representative: Manitz Finsterwald Patent- und Rechtsanwaltspartnerschaft mbB
(86) International application number: PCT/CN2019/101413
(87) International publication number: WO 2020/042958

(56) References cited:
- WO-A1-2016/200658
- CN-A- 103 179 624
- CN-A- 106 912 080
- QUALCOMM INCORPORATED ET AL: "Considerations on NR indication", 3GPP DRAFT; R2-1707879 CONSIDERATIONS ON NR INDICATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Berlin, Germany; 20170821 - 20170825 20 August 2017 (2017-08-20), XP051317816, Retrieved from the Internet: URL:http://www.3gpp.org/ftp/Meetings_3GPP_ SYNC/RAN2/Docs/ [retrieved on 2017-08-20]
- SAMSUNG: "5G status indicator for NR", 3GPP DRAFT; RP-180140_5G_INDICATOR_V03, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. TSG RAN, no. Chennai, India; 20180319 - 20180322 12 March 2018 (2018-03-12), XP051508929, Retrieved from the Internet: URL:http://www.3gpp.org/ftp/tsg%5Fran/TSG% 5FRAN/TSGR%5F79/Docs/RP%2D180140%2Ezip [retrieved on 2018-03-12]
- MEDIATEK INC: "On 5G Indicators", 3GPP DRAFT; S2-174624 ON 5G INDICATORS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. San José del Cabo, MX; 20170327 - 20170331 25 June 2017 (2017-06-25), XP051303467, Retrieved from the Internet: URL:http://www.3gpp.org/ftp/Meetings_3GPP_ SYNC/SA2/Docs/ [retrieved on 2017-06-25]
- NOKIA ET AL: "On NR/LTE Dual connectivity deployment options and what Service Indication the UE shall display", 3GPP DRAFT; S2-174603 SUPPORT OF SERVICE INDICATOR IN REL-15 V2, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. San Jose del Cabo, Mexico; 20170626 - 20170630 25 June 2017 (2017-06-25), XP051303447, Retrieved from the Internet: URL:http://www.3gpp.org/ftp/Meetings_3GPP_ SYNC/SA2/Docs/ [retrieved on 2017-06-25]
- MediaTek Inc: "On 5G Indicators", S2-174624 , SA WG2 Meeting #122, 31 March 2017 (2017-03-31), XP051309675,
- "Summary of Rel-15 Work Items(Release 15", 3GPP TR 21.915 V0.2.0, 31 July 2018 (2018-07-31), XP051551504,
- DONGWOOK KIM (GSMA): "LS Reply to 3GPP SA2 on Status Icon related to 5G", C1-175069, 28 August 2017 (2017-08-28), XP051367706,

## Description

### TECHNICAL FIELD

This disclosure relates to the technical field of mobile communication, and particularly to a method and device for user interface (UI) display, and a terminal device. Related technologies are known from QUALCOMM INCORPORATED et.al: "Considerations on NR indication", 3GPP DRAFT, R2-1707879, 20 August 2017.

### BACKGROUND

With the development of mobile communication networks, the mobile communication network has gradually evolved from a fourth generation (4G) mobile communication network to a fifth generation (5G) mobile communication network. During evolution of the mobile communication network, evolution of a radio access network (RAN) and a core network (CN) as well as evolution of a terminal are independent of each other. In the case that 5G core network technologies and 5G terminal technologies are not mature enough, data transmission needs to rely on a 4G core network, and the terminal can access the 4G core network through a 4G access network and a 5G access network. This network architecture belongs to a non-stand alone (NSA) architecture.

Since there are two types of access networks in the NSA architecture, for the terminal device, how to determine the type of an access network currently connected and accurately displays the type of the access network for a current service through a user interface (UI) of the terminal device has become a problem to be solved.

### SUMMARY

The present invention is defined in the independent claims. According to implementations of the disclosure, a method and device for user interface (UI) display, and a terminal device are provided. In one aspect a computer-readable storage medium is further provided.

Technical solutions of the disclosure include the following.

In implementations of the disclosure, a method for UI display is provided. A first neighboring-cell signal quality obtained by measuring a neighboring cell of a first access network is determined, and a second neighboring-cell signal quality obtained by measuring a neighboring cell of a second access network is determined. First prompt information for the first access network or second prompt information for the second access network is displayed based on the first neighboring-cell signal quality and the second neighboring-cell signal quality.

In implementations of the disclosure, a device for UI display is provided. The device includes a determining module and a display module. The determining module is configured to determine a first neighboring-cell signal quality obtained by measuring a neighboring cell of a first access network, and determine a second neighboring-cell signal quality obtained by measuring a neighboring cell of a second access network. The display module is configured to display, based on the first neighboring-cell signal quality and the second neighboring-cell signal quality, first prompt information for the first access network or second prompt information for the second access network.

In implementations of the disclosure, a terminal device is provided. The terminal device includes a memory and a processor. The memory stores a computer program. The processor is configured to call and run the computer program stored in the memory and configured to execute the above method for UI display.

In implementations of the disclosure, a chip configured to implement the method for UI display is provided. The chip includes a processor configured to call and run a computer program from a memory. The computer program is operable with a device equipped with the chip to execute the above method for UI display.

In implementations of the disclosure, a computer-readable storage medium is provided. The computer-readable storage medium stores a computer program which is operable with a computer to execute the above method for UI display.

In implementations of the disclosure, a computer program product is provided. The computer program product includes a computer program instruction which is operable with a computer to execute the above method for UI display.

In implementations of the disclosure, a computer program is provided. The computer program, when executed by a computer, causes the computer to execute the above method for UI display.

According to the method and device for UI display and the terminal device, a neighboring-cell signal quality for the first access network can be obtained by measuring the neighboring cell of the first access network, and a neighboring-cell signal quality for the second access network can be obtained by measuring the neighboring cell of the second access network. Since the terminal device is in a moving state, an access network type can be used only when a neighboring-cell signal quality for the access network type is good enough. To this end, in the implementations of the disclosure, in order to display prompt information for an access network accurately, signal qualities of neighboring cells of the first access network and the second access network are taken into consideration, to achieve proper display of the UI.

### BRIEF DESCRIPTION OF THE DRAWINGS

FIG. 1 is a schematic diagram illustrating a communication system architecture according to implementations.
FIG. 2 is a schematic diagram illustrating an Option 3a architecture according to implementations.
FIG. 3 is a schematic diagram illustrating a non-stand alone (NSA) architecture according to implementations.
FIG. 4 is a schematic flowchart illustrating a method for user interface (UI) display according to implementations.
FIG. 5(a) is a schematic diagram illustrating a UI according to implementations.
FIG. 5(b) is a schematic diagram illustrating another UI according to implementations.
FIG. 6 is a schematic diagram illustrating connections between a core network and a first access network as well as a second access network according to implementations.
FIG. 7 is a schematic structural diagram illustrating a device for UI display according to implementations.
FIG. 8 is a schematic structural diagram illustrating a communication device according to implementations.
FIG. 9 is a schematic structural diagram illustrating a chip according to implementations.
FIG. 10 is a schematic block diagram illustrating a communication system according to implementations.

### DETAILED DESCRIPTION

Technical solutions of implementations of the disclosure will be described with reference to accompanying drawings in the implementations. Apparently, implementations described hereinafter are merely some implementations, rather than all implementations of the disclosure. All other implementations obtained by those of ordinary skill in the art based on the implementations without creative efforts shall fall within the protection scope of the disclosure.

The technical solutions of the implementations are applicable to various communication systems, such as a global system of mobile communication (GSM), a code division multiple access (CDMA) system, and a wideband code division multiple access (WCDMA) system, a general packet radio service (GPRS) system, a long term evolution (LTE) system, an LTE frequency division duplex (FDD) system, an LTE time division duplex (TDD) system, a universal mobile telecommunication system (UMTS), a worldwide interoperability for microwave access (WiMAX) communication system or fifth generation (5G) system, and so on.

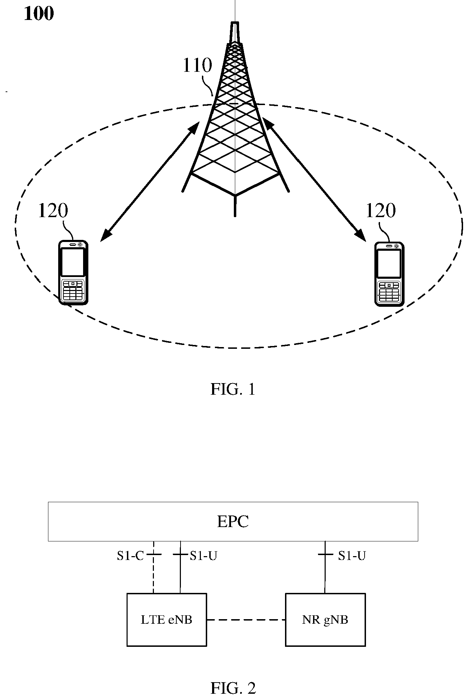

FIG. 1 exemplarily illustrates a communication system 100 of implementations of the disclosure. As illustrated in FIG. 1, the communication system 100 includes a network device 110. The network device 110 may be a device that communicates with a terminal device 120 (also known as a communication terminal device or terminal equipment). The network device 110 can provide communication coverage for a geographic region, and can communicate with a terminal device(s) within the coverage (i.e., a coverage area) of the network device. In some implementations, the network device 110 may be a base transceiver station (BTS) in a GSM system or a CDMA system, or a NodeB (NB) in a WCDMA system, or an evolutional Node B (eNB or eNodeB) in an LTE system, or a wireless controller in a cloud radio access network (CRAN), or the network device can be a mobile switching center, a relay station, an access point, an on-board device, a wearable device, a hub, a switch, a bridge, a router, a network side device in a 5G network, or a network device in the future public land mobile network (PLMN), etc.

The communication system 100 further includes at least one terminal device 120 within the coverage of the network device 110. The "terminal device" referred to herein includes, but is not limited to, a device configured to communicate via a wired line, another data connection/network, a wireless interface, a device which is part of another terminal device and configured to receive/transmit communication signals, and/or an Internet of things (IoT) equipment. Examples of the wired line may include, but are not limited to, a public switched telephone network (PSTN), a digital subscriber line (DSL), a digital cable, and a direct connection cable. Examples of the wireless interface may include, but are not limited to, a wireless interface for a cellular network, a wireless local area network (WLAN), a digital television network (e.g., a digital video broadcasting-handheld (DVB-H) network), a satellite network, an amplitude modulation-frequency modulation (AM-FM) broadcast transmitter. A terminal device configured to communicate via a wireless interface may be referred to as a "wireless communication terminal device", a "wireless terminal device", or a "mobile terminal device". Examples of the mobile terminal device may include, but are not limited to, a satellite telephone or cellular telephone, a personal communication system (PCS) terminal device integrated with functions of a cellular radio telephone, data processing, fax, and/or data communication, a personal digital assistant (PDA) equipped with a radio telephone, a pager, Internet/Intranet access, a web browser, a memo pad, calendar, and/or a global positioning system (GPS) receiver, and/or a conventional laptop, a handheld receiver, or other electronic devices equipped with a radio telephone transceiver. The terminal device may refer to an access terminal equipment, a user equipment (UE), a subscriber module, a subscriber station, a mobile station, a remote station, a remote terminal equipment, a mobile equipment, a user terminal equipment, a terminal equipment, a wireless communication equipment, a user agent, or a user device. The access terminal equipment may be a cellular radio telephone, a cordless telephone, a session initiation protocol (SIP) telephone, a wireless local loop (WLL) station, a PDA, a handheld device with wireless communication functions, a computing device or other processing devices connected with a wireless modem, an on-board device, a wearable device, a terminal device in a 5G network or a terminal device in the future PLMN, etc.

In one implementation, device to device (D2D) communication can be performed between the terminal devices 120.

In one implementation, the 5G system or the 5G network may also be referred to as a new radio (NR) system or NR network.

FIG. 1 exemplarily illustrates a network device and two terminal devices. In one implementation, the communication system 100 includes multiple network devices, and other number of terminal devices may be within the coverage of each of the multiple network devices, which is not limited in the disclosure.

In one implementation, the communication system 100 further includes other network entities such as a network controller and a mobility management entity, which is not limited in the disclosure.

A device having communication functions in a network/system may be referred to as a communication device. Taking the communication system 100 illustrated in FIG. 1 as an example, the communication device may be a terminal device 120 or a network device 110 having communication functions. The network device 110 and the terminal device 120 may be the devices described above, which will not be repeated herein. The communication device may also be other devices in the communication system 100, such as a network controller, a mobility management entity, and other network entities, which is not limited in the disclosure.

The terms "system" and "network" herein can be used interchangeably. The term "and/or" herein refers to an association relationship for describing associated objects, which means that there can be three kinds of relationships. For example, "*A* and/or *B* " means that: *A* alone, both *A* and *B* exist, *B* alone. In addition, the character "/" herein generally indicates that associated objects before and after the character "/" are in an "or" relationship.

For easy understanding of the technical solutions, related technologies will be described below.

Option 3a architecture: the characteristics of the Option 3a architecture are that the core network is a fourth generation (4G) core network, that is, an evolved packet core (EPC), and the access network has LTE functions and NR functions. In terms of interaction between a terminal device and a base station, control plane signaling is transferred through an LTE base station; user plane data of the terminal device is distributed at the terminal device and then transmitted to the core network through the LTE and the NR independently.

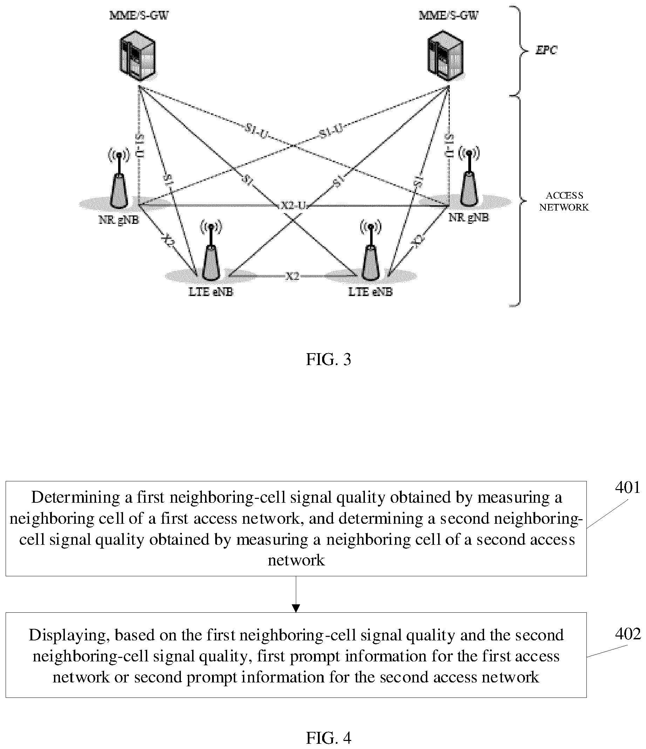

The Option 3a architecture belongs to a non-stand alone (NSA) architecture. For the Option 3a architecture, as illustrated in FIG. 2 and FIG. 3, the access network includes two parts: a 4G access network and a 5G access network. A network element of the 4G access network is an LTE eNB (e.g., a 4G base station), and a network element of the 5G access network is an NR gNB (e.g., a 5G base station). The core network of the Option 3a architecture is a 4G core network, that is, EPC. The LTE eNB serves as a master node (MN) in dual connectivity (DC), and the NR gNB serves as a secondary node (SN) in DC. Interfaces between the LTE eNB and the EPC are S1 interfaces, which include control plane interfaces (e.g., S1-C interfaces) and user plane interfaces (e.g., S1-U interfaces). Only user plane interfaces (e.g., S1-U interfaces) exist between the NR gNB and the EPC. EUTRA-NR dual connectivity (ENDC) related processes between the LTE eNB and the NR gNB are performed via X2 interfaces (including X2-C interfaces and X2-U interfaces).

In implementations of the disclosure, for realization of enhance mobile broadband (eMBB) functions in 5G, both the NR access network and the LTE access network can be distribution paths of data. Since EPC is a 4G core network, the network configuration and indicators thereof cannot fully meet 5G requirements. However, with the evolution of LTE technologies and the improvement of EPC capabilities, some EPC indicators will satisfy or basically satisfy 5G technical indicators specified in the 3rd Generation Partnership Project (3GPP).

In this process, UI display of access technologies on the terminal device should truly reflect user scenarios and a current network state of the terminal device.

As an example, when a UE has attached to an LTE eNB and an NR gNB and is in a service mode, UE→NR gNB→EPC is a complete link when the UE is in a static state. Since a bandwidth of the link (new radio and an interface of the core network) is much larger than a bandwidth of UE→LTE eNB→EPC, when radio resources of the two links both meet desired requirements, for the UE, the NR link is preferred.

Implementations of the disclosure provide a method for UI display. As illustrated in FIG. 4, the method begins at block 401.

At block 401, a first neighboring-cell signal quality obtained by measuring a neighboring cell of a first access network is determined, and a second neighboring-cell signal quality obtained by measuring a neighboring cell of a second access network is determined.

At block 402, first prompt information for the first access network or second prompt information for the second access network is displayed based on the first neighboring-cell signal quality and the second neighboring-cell signal quality.

The technical solutions of the implementations of the disclosure are applicable to a terminal device. The terminal device herein may be any mobile device capable of communicating with the network, such as a mobile phone, a tablet computer, an on-board terminal, and a notebook.

In some implementations, the first access network is different from the second access network. The first access network may differ from the second access network in at least one of the following aspects: the first access network and the second access network comply with different communication protocols; the first access network and the second access network use different access network elements; and the first access network and the second access network are mobile communication networks of different generations.

In some implementations, the first access network is a 5G access network, and the second access network is a 4G access network; or, the first access network is an NR access network, and the second access network is an LTE access network.

In other implementations, the first access network is a third generation (3G) access network, and the second access network is a 4G access network.

The above are examples of the first access network and the second access network, and implementations are not limited to the above examples.

The first neighboring-cell signal quality and the second neighboring-cell signal quality can be collectively referred to as neighboring-cell signal quality, which can be expressed as various indicators for indicating the strength of a wireless signal. For example, the neighboring-cell signal quality can be characterized by reference signal receiving power (RSRP) of a neighboring cell, or characterized by a signal to interference plus noise ratio (SINR) of a reference signal of a neighboring cell.

In some implementations, the operations at block 401 include the following. A neighboring-cell signal quality corresponding to the first access network and a neighboring-cell signal quality corresponding to the second access network are determined respectively. For example, the terminal device detects a neighboring-cell signal quality for the first access network to obtain the first neighboring-cell signal quality, and detects a neighboring-cell signal quality for the second access network to obtain the second neighboring-cell signal quality. The terminal device can detect the neighboring-cell signal quality in various manners. For example, the terminal device receives a signal through a wireless antenna, and determines through signal analysis (e.g., coherence analysis) that a signal quality indicator such as signal strength is good, where the signal quality indicator is the first neighboring-cell signal quality and the second neighboring-cell signal quality.

In some implementations, when the first access network and the second access network provide coverage together, that is, a geographic space is covered by both the first access network and the second access network, the terminal device detects a signal quality of a first access network device to obtain the first neighboring-cell signal quality, and detects a signal quality of a second access network device to obtain the second neighboring-cell signal quality.

The first prompt information and the second prompt information may have various contents, such us text information (e.g., texts about the first access network and the second access network) and icon. In the case that a 5G access network is used as the first access network and a 4G access network is used as the second access network, displaying a first network identifier or a second network identifier includes: displaying text "5G" or text "4G"; or, displaying an icon of 5G or an icon of 4G. In the case that an NR access network is used as the first access network and an LTE access network is used as the second access network, displaying the first network identifier or the second network identifier includes: displaying text "NR" or text "LTE"; or, displaying an icon of NR or an icon of LTE.

The first prompt information and the second prompt information may be in various forms, and implementations are not limited to any of the foregoing forms.

The first prompt information and the second prompt information may be displayed in a floating display manner or on a predetermined page. If the first prompt information and the second prompt information are displayed in the floating display manner, when a background interface for displaying the first prompt information or the second prompt information is switched, the first prompt information or the second prompt information will remain displayed. If the first prompt information and the second prompt information are displayed on a predetermined interface, when the predetermined interface is switched to another interface, the first prompt information and the second prompt information will be hidden.

In some implementations, the operations at block 402 include the following. The first prompt information or the second prompt information is displayed on a predetermined page in a floating display manner. As an example, the first prompt information or the second prompt information is displayed on a predetermined UI of the terminal device in the floating display manner. The predetermined UI may include any interface where the above prompt information is displayed, for example, a desktop, an application interface of an application. In some implementations, the predetermined UI may be a system interface of an operating system or a non-full-screen UI interface of an application. The non-full-screen UI interface may be an interface other than a full-screen UI interface, and the full-screen UI interface may be a full-screen playback interface of a video application.

The first prompt information and the second prompt information may correspond to a same display position. If the first prompt information is displayed in the display position, the second prompt information will be hidden. Similarly, if the second prompt information is displayed in the display position, the first prompt information will be hidden. In this way, the first prompt information and the second prompt information share one display position, which reduces occupation of the display position.

In some implementations, the first prompt information and the second prompt information can be displayed in a predetermined position of the display of the terminal device, and the predetermined position is related to a display mode of the terminal device.

The display mode of the terminal device may include a portrait displaying mode and a landscape displaying mode.

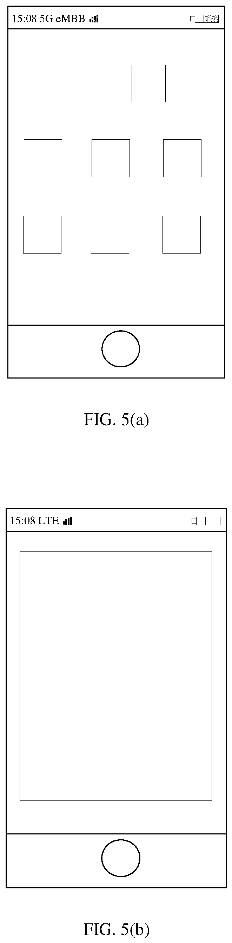

In the portrait displaying mode, a short side of a display screen of the terminal device is parallel to or approximately parallel to a preset plane, and a long side of the display screen is perpendicular to the short side. The preset plane may be the ground or a support surface such as a table top. FIG. 5(a) and FIG. 5(b) are display schematic diagrams illustrating the terminal device in the portrait displaying mode.

In the landscape displaying mode, the long side of the display screen of the terminal device is parallel to or approximately parallel to the preset plane, and the short side is perpendicular to the long side. The preset plane may be the ground or a support surface such as a table top. The length of the long side is greater than that of the short side.

If the terminal device is in the portrait displaying mode, the predetermined position may be the top of the display screen away from the preset plane, or one side of the display screen parallel to the long side. If the terminal device is in the landscape displaying mode, the predetermined position may be the top of the display screen away from the preset plane, or one side of the display screen parallel to the short side.

According to the claimed implementations, the operations of displaying the first prompt information or the second prompt information on the UI at block 402 include: displaying on the UI a first network identifier of the first access network or a second network identifier of the second access network; displaying on the UI first quality-grade information of the first neighboring-cell signal quality of the first access network or second quality-grade information of the second neighboring-cell signal quality of the second access network.

For example, the first access network is a 5G access network and the second access network is a 4G access network. Displaying the first network identifier or the second network identifier includes: displaying text "5G" or text "4G"; or, displaying an icon of 5G or an icon of 4G.

For example, the first access network is an NR access network and the second access network is an LTE access network. Displaying the first network identifier or the second network identifier includes: displaying text "NR" or text "LTE"; or, displaying an icon of NR or an icon of LTE.

The first quality-grade information of the first neighboring-cell signal quality for the first access network or the second quality-grade information of the second neighboring-cell signal quality for the second access network can be displayed on the UI. Neighboring-cell signal qualities can be classified into multiple grades, and the grades of neighboring-cell signal qualities can be represented by different graphic objects in a set of icons.

In some implementations, the grades of neighboring-cell signal qualities for the first access network and the second access network can be expressed in different manners.

The grades of neighboring-cell signal qualities can be expressed in at least one of the following manners.

### First manner

The set of icons is composed of a set of columns with different lengths. As an example, the higher the grade of a neighboring-cell signal quality, the larger the number of filled columns and/or the longer the length of the filled columns. On the other hand, the lower the grade of the neighboring-cell signal quality, the larger the number of hollow (i.e., unfilled) columns and/or the longer the length of the hollow columns. As another example, the higher the grade of a neighboring-cell signal quality, the smaller the number of filled columns and/or the shorter the length of the filled columns. On the other hand, the lower the grade of the neighboring-cell signal quality, the smaller the number of hollow columns and/or the shorter the length of the hollow columns.

### Second manner

The set of icons is composed of a set of concentric arcs with same center angles and different radii. As an example, the higher the grade of the neighboring-cell signal quality, the larger the number of filled arcs and/or the longer the arc length of the filled arcs. On the other hand, the lower the grade of the neighboring-cell signal quality, the larger the number of hollow (i.e., unfilled) arcs and/or the longer the arc length of the hollow arcs. As another example, the higher a grade of a neighboring-cell signal quality, the smaller the number of filled arcs and/or the shorter the arc length of the filled arcs. On the other hand, the lower the grade of the neighboring-cell signal quality, the smaller the number of hollow arcs and/or the shorter the arc length of the hollow arcs.

### Third manner

The set of icons is composed of a set of concentric circles with different radii. As an example, the higher a grade of a neighboring-cell signal quality, the larger the number of filled circles and/or the longer the circumference of the filled circles. On the other hand, the lower the grade of the neighboring-cell signal quality, the larger the number of hollow (i.e., unfilled) circles and/or the longer the circumference of the hollow circles. As another example, the higher a grade of a neighboring-cell signal quality, the smaller the number of filled circles and/or the shorter the circumference of the filled circles. On the other hand, the lower the grade of the neighboring-cell signal quality, the smaller the number of hollow circles and/or the shorter the circumference of the hollow circles.

In some implementations, rather than displaying both the first prompt information and the second prompt information simultaneously, the first prompt information or the second prompt information is displayed on the UI based on the first neighboring-cell signal quality and the second neighboring-cell signal quality.

In some implementations, the operations at block 402 include the following. If the first neighboring-cell signal quality is measured successfully and a weighted average of the first neighboring-cell signal quality and the second neighboring-cell signal quality meets a first access standard, the first prompt information is displayed.

When the first neighboring-cell signal quality is measured successfully, it means that a signal of a neighboring cell of the first access network is measured successfully.

If a first weight corresponding to the first neighboring-cell signal quality is equal to a second weight corresponding to the second neighboring-cell signal quality, the weighted average of the first neighboring-cell signal quality and the second neighboring-cell signal quality is an arithmetic average of the first neighboring-cell signal quality and the second neighboring-cell signal quality.

If the first weight is not equal to the second weight, the weighted average of the first neighboring-cell signal quality and the second neighboring-cell signal quality is not equal to the arithmetic average.

In some implementations, the weighted average meets the first access standard as follows. The weighted average is greater than or equal to a quality threshold defined by the first access standard. If the weighted average is less than the quality threshold, the first access standard is not met.

If the weighted average meets the first access standard, at least the first prompt information is displayed on the UI. In other implementations, both the first prompt information and the second prompt information are displayed on the UI.

In some implementations, the relationship between the first weight and the second weight is not limited in the disclosure. If the first weight is less than the second weight, on condition that the weighted average meets the first access standard, the first neighboring-cell signal quality of the first access network is good. In this case, only the first prompt information is displayed on the UI. For the terminal device, the first access network is preferred for data transmission.

In some implementations, the operations at block 402 include the following. If the weighted average of the first neighboring-cell signal quality and the second neighboring-cell signal quality meets the first access standard, the first prompt information is displayed on the UI. If the weighted average of the first neighboring-cell signal quality and the second neighboring-cell signal quality does not meet the first access standard, the second prompt information is displayed on the UI.

In some implementations, the operations at block 402 include the following. If the weighted average of the first neighboring-cell signal quality and the second neighboring-cell signal quality meets the first access standard, and the first neighboring-cell signal quality meets a second access standard, the first prompt information is displayed on the UI.

In some implementations, the first neighboring-cell signal quality meets the second access standard as follows. The first neighboring-cell signal quality is greater than a second quality threshold of the second access standard; or, the first neighboring-cell signal quality is greater than the second neighborhood-cell signal quality. The above are only examples for illustrating how the first neighboring-cell signal quality meets the second access standard, and implementations are not limited to the foregoing examples.

In some implementations, a quality threshold corresponding to the second access standard is less than a quality threshold corresponding to the first access standard. In this way, when the terminal device displays only the first prompt information, it ensures that a neighboring-cell signal quality of the first access network that the terminal device accesses is good enough to meet data transmission requirements of the terminal device. As such, it is possible to avoid displaying of the first prompt information where the weighted average meets the first access standard because the second neighboring-cell signal quality is very good but the first neighboring-cell signal quality is very poor, in other words, the terminal device basically uses the second access network to transmit data.

In some implementations, the weighted average of the first neighboring-cell signal quality and the second neighboring-cell signal quality meets the first access standard as follows. The weighted average of the first neighboring-cell signal quality and the second neighboring-cell signal quality is greater than the quality threshold of the first access standard.

In some implementations, the operations at block 401 include the following. Upon detecting that the terminal device attaches to the first access network and the second access network and the terminal device is moving in an idle state, the first neighboring-cell signal quality is obtained by measuring a neighboring cell of the first access network, and the second neighboring-cell signal quality is obtained by measuring a neighboring cell of the second access network.

In other implementations, upon detecting that the terminal device attaches to the first access network and the second access network and the terminal device is moving, the first neighboring-cell signal quality is obtained by measuring a neighboring cell of the first access network, and the second neighboring-cell signal quality is obtained by measuring a neighboring cell of the second access network. In this case, the terminal device may be in a connected state or an idle state. As long as the terminal device is moving, neighboring cell measurements are performed on the first access network and the second access network.

In other implementations, upon detecting that the terminal device attaches to the first access network and the second access network and the terminal device is in an idle state, the first neighboring-cell signal quality is obtained by measuring a neighboring cell of the first access network, and the second neighboring-cell signal quality is obtained by measuring a neighboring cell of the second access network.

When the terminal device is powered on and enters an environment where the first access network and the second access network provide coverage together, from an environment with no network coverage or poor network coverage, the terminal device attaches to the networks by sending an attachment request, etc. In this case, the operations at block 401 are executed to trigger execution of the operations at block 401 and block 402, so as to realize display or display switching of the first prompt information or the second prompt information.

In some implementations, a first link is established between the first access network and a core network, and a second link is established between the second access network and the core network.

In the implementation, the link between the first access network and the core network as well as the link between the second access network and the core network are established respectively, and the links can be used for data transmission and/or signaling transmission.

As an example, the first access network performs data transmission with the core network via the first link, and the second access network performs data and signaling transmission with the core network via the second link.

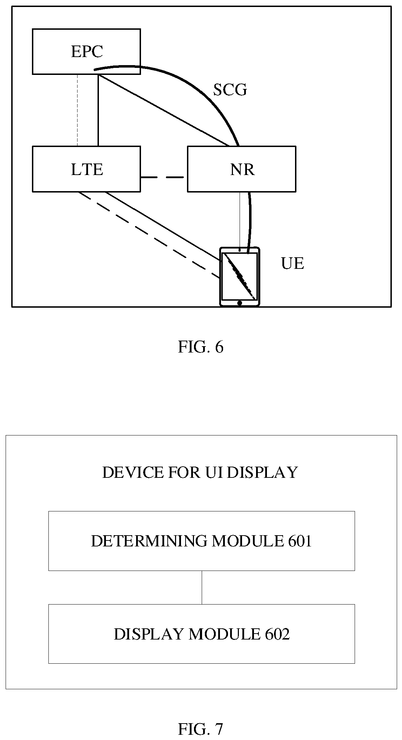

As illustrated in FIG. 6, the link between the first access network (e.g., an NR access network) and the core network as well as the link between the second access network (e.g., an LTE access network) and the core network are established respectively. The NR access network can perform data transmission and/or signaling transmission via the link between the NR access network and the core network, and the LTE access network can perform data transmission and/or signaling transmission via the link between the LTE access network and the core network. In some implementations, the signaling transmission between the first access network and the core network is performed through the second access network and the second link between the second access network and the core network. In this way, signaling of the first access network and the second access network can be aggregated and managed uniformly at the second access network, for access control coordination of the first access network and the second access network, for example, for wireless resource coordination, etc.

In FIG. 6, the first access network and the second access network provide access cells for a terminal device respectively. For example, the second access network provides a master cell group (MCG) for the terminal device, and the first access network provides a secondary cell group (SCG) for the terminal device. Then high-speed transmission or high-bandwidth transmission is achieved through split bearer.

As illustrated in FIG. 7, implementations of the disclosure provide a device for UI display. The device includes a determining module 601 and a display module 602. The determining module 601 is configured to determine a first neighboring-cell signal quality for a first access network and a second neighboring-cell signal quality for a second access network. The display module 602 is configured to display, based on the first neighboring-cell signal quality and the second neighboring-cell signal quality, first prompt information for the first access network or second prompt information for the second access network on the UI. The device for UI display can be applicable to a terminal device.

In some implementations, the determining module 601 and the display module 602 of the terminal device are program modules. The program modules, when executed by a processor, are configured to determine the first neighboring-cell signal quality and the second neighboring-cell signal quality, and display the first prompt information or the second prompt information.

In some implementations, the determining module 601 and the display module 602 can include hardware structures and programs for the structures. For example, the determining module 601 and the display module 602 may be a complex programmable logic device (CPLD) or a field programmable gate array (FPGA).

In other implementations, the determining module 601 and the display module 602 include only hardware modules, such as application specific integrated circuits.

Specific structures of the determining module 601 and the display module 602 may be various, and implementations are not limited to any of the foregoing structures.

In some implementations, the display module 602 is configured to display the first prompt information on condition that the first neighboring-cell signal quality is measured successfully and a weighted average of the first neighboring-cell signal quality and the second neighboring-cell signal quality meets a first access standard.

In some implementations, the display module 602 is further configured to display the second prompt information on condition that the weighted average does not meet the first access standard.

In some implementations, the display module 602 is further configured to display the second prompt information on condition that the first neighboring-cell signal quality fails to be measured.

In some implementations, the display module 602 is configured to display the first prompt information, on condition that the first neighboring-cell signal quality is measured successfully and the weighted average of the first neighboring-cell signal quality and the second neighboring-cell signal quality reaches a quality threshold of the first access standard.

In some implementations, the display module 602 is further configured to display the first prompt information on condition that the first neighboring-cell signal quality is measured successfully, the weighted average meets the first access standard, and the first neighboring-cell signal quality meets a second access standard.

In some implementations, the first neighboring-cell signal quality meets the second access standard as follows. The first neighboring-cell signal quality reaches a quality threshold of the second access standard; or, the first neighboring-cell signal quality is higher than the second neighboring-cell signal quality.

In some implementations, the determining module 601 is configured to obtain the first neighboring-cell signal quality by measuring the neighboring cell of the first access network, and obtain the second neighboring-cell signal quality by measuring the neighboring cell of the second access network, upon detecting that a terminal device attaches to the first access network and the second access network and the terminal device is moving in an idle state.

In some implementations, a first link is established between the first access network and a core network, and a second link is established between the second access network and the core network.

In some implementations, the first access network is a 5G access network, and the second access network is a 4G access network; or, the first access network is an NR access network, and the second access network is an LTE access network.

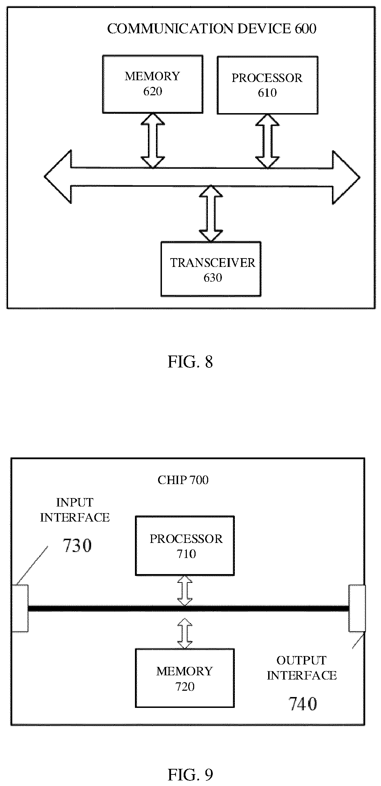

FIG. 8 is a schematic structural diagram illustrating a communication device 600 according to implementations. The communication device may be a terminal device. As illustrated in FIG. 8, the communication device 600 includes a processor 610. The processor 610 is configured to call and run a computer program from a memory to implement the method in the implementations of the disclosure.

In some implementations, as illustrated in FIG. 8, the communication device 600 further includes a memory 620. The processor 610 is configured to call and run a computer program from the memory 620 to implement the method in the implementations of the disclosure.

The memory 620 may be a device separate from the processor 610, or may be integrated with the processor 610.

In some implementations, as illustrated in FIG. 8, the communication device 600 further includes a transceiver 630. The processor 610 is configured to control the transceiver 630 to communicate with other devices, for example, to send information or data to other devices or receive information or data sent by other devices.

The transceiver 630 may include a transmitter and a receiver. The transceiver 630 may further include an antenna, where one or more antennas are included.

In some implementations, the communication device 600 is embodied as the network device of the implementations of the disclosure, and the communication device 600 can implement the operations implemented by the network device in the foregoing method of the implementations of the disclosure. For the sake of simplicity, details for the operations are not repeated herein.

In some implementations, the communication device 600 is embodied as the mobile terminal device/terminal device of the implementations of the disclosure, and the communication device 600 can implement the operations implemented by the mobile terminal device/terminal device in the foregoing method of the implementations of the disclosure. For the sake of simplicity, details for the operations are not repeated herein.

FIG. 9 is a schematic structural diagram illustrating a chip according to implementations. As illustrated in FIG. 9, a chip 700 includes a processor 710. The processor 710 is configured to call and run a computer program from a memory to implement the method in the implementations of the disclosure.

In some implementations, as illustrated in FIG. 9, the chip 700 further includes a memory 720. The processor 710 is configured to call and run a computer program from the memory 720 to implement the method in the implementations of the disclosure.

The memory 720 may be a device separate from the processor 710, or may be integrated with the processor 710.

In some implementations, the chip 700 further includes an input interface 730. The processor 710 is configured to control the input interface 730 to communicate with other devices or chips, for example, to obtain information or data sent by other devices or chips.

In some implementations, the chip 700 further includes an output interface 740. The processor 710 is configured to control the output interface 740 to communicate with other devices or chips, for example, to output information or data to other devices or chips.

In some implementations, the chip can be applicable to the network device in the implementations of the disclosure, and the chip can implement the operations implemented by the network device in the foregoing method of the implementations of the disclosure. For the sake of simplicity, details for the operations are not repeated herein.

In some implementations, the chip can be applicable to the mobile terminal device/terminal device in the implementations of the disclosure, and the chip can implement the operations implemented by the mobile terminal device/terminal device in the foregoing method of the implementations of the disclosure. For the sake of simplicity, details for the operations are not repeated herein.

The chip mentioned in the implementations of the disclosure may also be referred to as a system-level chip, a chip system, or a system-on chip.

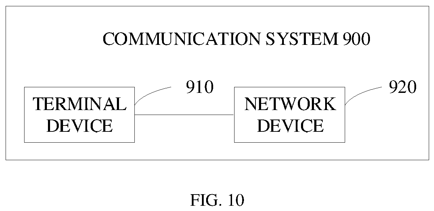

FIG. 10 is a schematic block diagram illustrating a communication system 900 according to implementations. As illustrated in FIG. 10, the communication system 900 includes a terminal device 910 and a network device 920.

The terminal device 910 is configured to implement the functions implemented by the terminal device in the foregoing method, and the network device 920 is configured to implement the functions implemented by the network device in the foregoing method. For the sake of simplicity, details for the operations are not repeated herein.

An illustrative example is provided below in conjunction with the foregoing implementations of the disclosure.

### First example

A connection manner of the disclosure is to realize eMBB functions of a 5G architecture, where NR and LTE are distribution paths of data. Since EPC is a 4G core network, the network configuration and indicators thereof cannot fully meet 5G requirements. However, with the evolution of LTE technologies and the improvement of EPC capabilities, some EPC indicators will satisfy or basically satisfy 5G technical indicators specified in the 3GPP.

In this process, UI display of access technologies on a UE should truly reflect a current network state and user scenarios.

Specifically, when the UE has attached to an LTE base station and an NR base station and is in an idle state, during movement of the UE, neighboring-cell measurements are performed on a neighboring cell(s) of the configured LTE base station and a neighboring cell(s) of the configured NR base station. Based on qualities under joint coverage of the LTE base station and the NR base station: if the neighboring-cell measurements fail, prompt information for the 4G network is displayed; if the neighboring-cell measurement for NR is successful, and RSRP_average = (RSRP_NR + RSRP_LTE)/2 reaches a threshold (i.e., an average of signal qualities of neighboring cells of the two access networks), such as RSRP_average> -100 dBm, prompt information for the 5G network is displayed; if signal strength of the neighboring cell indicated by the RSRP_average is lower than the threshold, the prompt information for the 4G network is still displayed. The method for UI display can be used for a UI display rule when the terminal device is powered on.

The processor of the implementations of the disclosure may be an integrated circuit chip with signal processing capabilities. In an implementation process, the operations of the foregoing method implementations can be completed by a hardware integrated logic circuit of the processor or instructions in the form of software. The processor may be a general-purpose processor, a digital signal processor (DSP), an application specific integrated circuit (ASIC), a field programmable gate array (FPGA) or other programmable logic devices, discrete gates or transistor logic devices, discrete hardware components, and so on. The processor can implement or execute the method, operations, and block diagrams of the implementations of the disclosure. The general-purpose processor may be a microprocessor, or may also be any conventional processor or the like. The operations of the method of the implementations of the disclosure may be directly embodied as being executed and completed by a hardware decoding processor, or executed by a combination of hardware and a software module of the decoding processor. The software module may be located in a mature storage medium in the field such as a random access memory, a flash memory, a read-only memory, a programmable read-only memory, or electrically erasable programmable memory, a register. The storage medium may be located in a memory. The processor reads information from the memory and completes the operations of the foregoing method in combination with its hardware.

The memory in the implementations of the disclosure may be a transitory memory or a non-transitory memory, or may include the transitory memory and the non-transitory memory. The non-transitory memory may be a read-only memory (ROM), a programmable ROM (PROM), erasable PROM (EPROM), and electrically EPROM (EEPROM), or a flash memory. The transitory memory may be a random access memory (RAM), which is used as an external cache. Based on the above exemplary but not restrictive description, many forms of RAM are available, such as a static RAM (SRAM), a dynamic RAM (DRAM), and a synchronous DRAM (SDRAM), a double data rate SDRAM (DDR SDRAM), an enhanced SDRAM (ESDRAM), a synch link DRAM (SLDRAM), and a direct rambus RAM (DR RAM). The memory of the system and the method described herein is intended to include, but is not limited to, the above memories and any other suitable type of memory.

The foregoing examples of the memory are merely illustrative but not restrictive. For example, the memory in the implementations of the disclosure may also be a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM), a direct rambus RAM (DR RAM), etc. That is, the memory in the implementations of the disclosure is intended to include, but is not limited to, the above memories and any other suitable type of memory.

In implementations of the disclosure, a computer-readable storage medium is further provided. The computer-readable storage medium is configured to store a computer program.

In some implementations, the computer-readable storage medium is applicable to the network device in the implementations of the disclosure. The computer program is operable with a computer to execute the operations implemented by the network device in the foregoing method of the implementations of the disclosure. For the sake of simplicity, details for the operations are not repeated herein.

In some implementations, the computer-readable storage medium is applicable to the mobile terminal device/terminal device in the implementations of the disclosure. The computer program is operable with a computer to execute the operations implemented by the mobile terminal device/terminal device in the foregoing method of the implementations of the disclosure. For the sake of simplicity, details for the operations are not repeated herein.

In implementations of the disclosure, a computer program product is further provided. The computer program product includes a computer program instruction.

In some implementations, the computer program product is applicable to the network device in the implementations of the disclosure. The computer program instruction is operable with a computer to execute the operations implemented by the network device in the foregoing method of the implementations of the disclosure. For the sake of simplicity, details for the operations are not repeated herein.

In some implementations, the computer program product is applicable to the mobile terminal device/terminal device in the implementations of the disclosure. The computer program instruction is operable with a computer to execute the operations implemented by the mobile terminal device/terminal device in the foregoing method of the implementations of the application. For the sake of simplicity, details for the operations are not repeated herein.

In implementations of the disclosure, a computer program is further provided.

In some implementations, the computer program can be applicable to the network device in the implementations of the disclosure. The computer program, when executed by a computer, is operable with the computer to execute the operations implemented by the network device in the foregoing method of the implementations of the disclosure. For the sake of simplicity, details for the operations are not repeated herein.

In some implementations, the computer program can be applicable to the mobile terminal device/terminal device in the implementations of the disclosure. The computer program, when executed by a computer, is operable with the computer to execute the operations implemented by the mobile terminal device/terminal device in the foregoing method in the implementations of the disclosure. For the sake of simplicity, details for the operations are not repeated herein.

Those skilled in the art should readily recognize that, in combination with the exemplary modules (or units) and algorithm steps described in the implementations disclosed herein, the disclosure can be implemented in hardware or a combination of hardware and computer software. Whether a function is implemented by way of hardware or software depends on the particular application and design constraints of the technical solution. Those skilled in the art may use different methods to implement the described functions for each particular application, but such implementation should not be considered as beyond the scope of the disclosure.

Those skilled in the art can clearly understand that, for the convenience and conciseness of description, the specific working process of the above-described system, device, and module can refer to the corresponding process in the foregoing method implementation, which is not repeated herein.

In the implementations of the disclosure, it should be understood that, the device disclosed in implementations provided herein may be implemented in other manners. For example, the device implementations described above are merely illustrative. For instance, the division of the modules is only a logical function division and there can be other manners of division during actual implementations, for example, multiple modules or assemblies may be combined or may be integrated into another system, or some features may be ignored, omitted, or not performed. In addition, coupling or communication connection between each illustrated or discussed component may be direct coupling or communication connection, or may be indirect coupling or communication among devices or modules via some interfaces, and may be electrical connection, mechanical connection, or other forms of connection.

The modules described as separate components may or may not be physically separated, the components illustrated as modules may or may not be physical units, that is, they may be in the same place or may be distributed to multiple network elements. All or part of the modules may be selected according to actual needs to achieve the technical solutions of the implementations.

In addition, the functional modules in various implementations of the disclosure may be integrated into one processing unit, or each module may be physically present, or two or more modules may be integrated into one module.

The functional module may be stored in a computer readable storage medium when it is implemented in the form of a software functional unit and is sold or used as a separate product. Based on such understanding, the technical solutions of the disclosure essentially, or the part of the technical solutions that contributes to the related art, or all or part of the technical solutions, may be embodied in the form of a software product which is stored in a storage medium and includes instructions for causing a computer device (which may be a personal computer, a server, or a network device and so on) to execute all or part of the operations of the method described in the various implementations of the disclosure. The storage medium includes various medium capable of storing program codes, such as a universal serial bus (USB), a ROM, a RAM, a magnetic disk, a compact disc (CD), or the like.

It should be noted that, the foregoing implementations are merely used to illustrate the technical solutions of the disclosure rather than limiting the disclosure. Any modifications, equivalent substitutions, or improvements that can be easily thought of by those skilled in the art without departing from the spirits and principles of the disclosure shall all be encompassed within the protection of the disclosure. Therefore, the protection of the disclosure depends on the protection of the claims.

The foregoing implementations are merely illustrative examples, and it is to be understood that the disclosure is not to be limited to the disclosed implementations. As will occur to those skilled in the art, any modifications or equivalent substitutions made thereto without departing from the spirits and principles of the disclosure shall all be encompassed within the protection of the disclosure. Therefore, the scope of the disclosure should be determined by the scope of the claims.

## Claims

1. A method performed by a device for a user interface, UI, display, for a wireless communication network having a non-stand alone architecture, **characterized by** comprising:
determining (401) a first neighboring-cell signal quality obtained by measuring a neighboring cell of a first access network, and determining a second neighboring-cell signal quality obtained by measuring a neighboring cell of a second access network; and
displaying (402), based on the first neighboring-cell signal quality and the second neighboring-cell signal quality, on the UI first prompt information for the first access network or second prompt information for the second access network, the first prompt comprising a first network identifier of the first access network and first quality-grade information of the first neighboring-cell signal quality, and the second prompt comprising a second network identifier of the second access network and second quality-grade information of the second neighboring-cell signal quality.

2. The method of claim 1, wherein displaying, based on the first neighboring-cell signal quality and the second neighboring-cell signal quality, the first prompt information for the first access network or the second prompt information for the second access network comprises:
displaying the first prompt information on condition that the first neighboring-cell signal quality is measured successfully and a weighted average of the first neighboring-cell signal quality and the second neighboring-cell signal quality meets a first access standard.

3. The method of claim 2, further comprising:
displaying the second prompt information on condition that the weighted average does not meet the first access standard.

4. The method of claim 2, further comprising:
displaying the second prompt information on condition that the first neighboring-cell signal quality fails to be measured.

5. The method of claim 2, wherein displaying the first prompt information on condition that the first neighboring-cell signal quality is measured successfully and the weighted average of the first neighboring-cell signal quality and the second neighboring-cell signal quality meets the first access standard comprises:
displaying the first prompt information on condition that the first neighboring-cell signal quality is measured successfully and the weighted average of the first neighboring-cell signal quality and the second neighboring-cell signal quality reaches a quality threshold of the first access standard.

6. The method of claim 2, wherein displaying the first prompt information on condition that the first neighboring-cell signal quality is measured successfully and the weighted average of the first neighboring-cell signal quality and the second neighboring-cell signal quality meets the first access standard comprises:
displaying the first prompt information, on condition that the first neighboring-cell signal quality is measured successfully, the weighted average meets the first access standard, and the first neighboring-cell signal quality meets a second access standard.

7. The method of claim 6, wherein the first neighboring-cell signal quality meets the second access standard as follows:
the first neighboring-cell signal quality reaches a quality threshold of the second access standard; or
the first neighboring-cell signal quality is higher than the second neighboring-cell signal quality.

8. The method of claim 1, wherein determining the first neighboring-cell signal quality obtained by measuring the neighboring cell of the first access network and determining the second neighboring-cell signal quality obtained by measuring the neighboring cell of the second access network comprise:
obtaining the first neighboring-cell signal quality by measuring the neighboring cell of the first access network, and obtaining the second neighboring-cell signal quality by measuring the neighboring cell of the second access network, upon detecting that a terminal device attaches to the first access network and the second access network and the terminal device is moving in an idle state.

9. The method of any of claims 1 to 8, wherein
a first link is established between the first access network and a core network; and
a second link is established between the second access network and the core network.

10. The method of any of claims 1 to 8, wherein
the first access network is a fifth generation, 5G, access network, and the second access network is a fourth generation, 4G, access network; or
the first access network is a new radio, NR, access network, and the second access network is a long term evolution, LTE, access network.

11. A device for user interface, UI, display, for a wireless communication network having a non-stand alone architecture, **characterized by** comprising:
a determining module (601), configured to determine a first neighboring-cell signal quality obtained by measuring a neighboring cell of a first access network, and determine a second neighboring-cell signal quality obtained by measuring a neighboring cell of a second access network; and
a display module (602), configured to display, based on the first neighboring-cell signal quality and the second neighboring-cell signal quality, on the UI first prompt information for the first access network or second prompt information for the second access network, the first prompt comprising a first network identifier of the first access network and first quality-grade information of the first neighboring-cell signal quality, and the second prompt comprising a second network identifier of the second access network and second quality-grade information of the second neighboring-cell signal quality.

12. The device of claim 11, wherein the display module is configured to display the first prompt information on condition that the first neighboring-cell signal quality is measured successfully and a weighted average of the first neighboring-cell signal quality and the second neighboring-cell signal quality meets a first access standard.

13. The device of claim 12, wherein the display module is further configured to display the first prompt information, on condition that the first neighboring-cell signal quality is measured successfully, the weighted average meets the first access standard, and the first neighboring-cell signal quality meets a second access standard.

14. A terminal device (600), comprising:
a memory (620), storing a computer program; and
a processor (610), configured to call and run the computer program stored in the memory and configured to execute the method of any of claims 1 to 10.

15. A computer-readable storage medium, storing a computer program code, which, when executed on a computer of a device of any of claims 11 to 13 is configured to execute the method of any of claims 1 to 10.

## Patentansprüche

1. Verfahren, das durch eine Vorrichtung für eine Benutzerschnittstellen, UI (User Interface), -Anzeige, durchgeführt wird, für ein Drahtlos-Kommunikationsnetz mit nicht eigenständiger Architektur, **dadurch gekennzeichnet, dass** es umfasst:
Bestimmen (401) einer ersten Nachbarzellen-Signalgüte, die durch Messen einer Nachbarzelle eines ersten Zugangsnetzes erhalten wird, und Bestimmen einer zweiten Nachbarzellen-Signalgüte, die durch Messen einer Nachbarzelle eines zweiten Zugangsnetzes erhalten wird; und
Anzeigen (402), basierend auf der ersten Nachbarzellen-Signalgüte und der zweiten Nachbarzellen-Signalgüte, erster Eingabeaufforderungsinformationen für das erste Zugangsnetz oder zweiter Eingabeaufforderungsinformationen für das zweite Zugangsnetz auf der UI, wobei die erste Eingabeaufforderung eine erste Netzkennung des ersten Zugangsnetzes und erste Qualitätsinformationen zur ersten Nachbarzellen-Signalgüte umfasst und wobei die zweite Eingabeaufforderung eine zweite Netzkennung des zweiten Zugangsnetzes und zweite Qualitätsinformationen zur zweiten Nachbarzellen-Signalgüte umfasst.

2. Verfahren nach Anspruch 1, wobei das Anzeigen, basierend auf der ersten Nachbarzellen-Signalgüte und der zweiten Nachbarzellen-Signalgüte, der ersten Eingabeaufforderungsinformationen für das erste Zugangsnetz oder der zweiten Eingabeaufforderungsinformationen für das zweite Zugangsnetz auf der Benutzerschnittstelle umfasst:
Anzeigen der ersten Eingabeaufforderungsinformationen unter der Bedingung, dass die erste Nachbarzellen-Signalgüte erfolgreich gemessen wurde und ein gewichteter Mittelwert der ersten Nachbarzellen-Signalgüte und der zweiten Nachbarzellen-Signalgüte einen ersten Zugangsstandard erfüllt.

3. Verfahren nach Anspruch 2, ferner umfassend:
Anzeigen der zweiten Eingabeaufforderungsinformationen unter der Bedingung, dass der gewichtete Mittelwert nicht dem ersten Zugriffsstandard entspricht.

4. Verfahren nach Anspruch 2, ferner umfassend:
Anzeigen der zweiten Eingabeaufforderungsinformationen unter der Bedingung, dass die erste Nachbarzellen-Signalgüte nicht gemessen werden kann.

5. Verfahren nach Anspruch 2, wobei das Anzeigen der ersten Eingabeaufforderungsinformationen unter der Bedingung, dass die erste Nachbarzellen-Signalgüte erfolgreich gemessen wurde und der gewichtete Mittelwert der ersten Nachbarzellen-Signalgüte und der zweiten Nachbarzellen-Signalgüte den ersten Zugangsstandard erfüllt, umfasst:
Anzeigen der ersten Eingabeaufforderungsinformationen unter der Bedingung, dass die erste Nachbarzellen-Signalgüte erfolgreich gemessen wurde und der gewichtete Mittelwert der ersten Nachbarzellen-Signalgüte und der zweiten Nachbarzellen-Signalgüte einen Qualitätsschwellenwert des ersten Zugangsstandards erreicht.

6. Verfahren nach Anspruch 2, wobei das Anzeigen der ersten Eingabeaufforderungsinformationen unter der Bedingung, dass die erste Nachbarzellen-Signalgüte erfolgreich gemessen wurde und der gewichtete Mittelwert der ersten Nachbarzellen-Signalgüte und der zweiten Nachbarzellen-Signalgüte den ersten Zugangsstandard erfüllt, umfasst:
Anzeigen der ersten Eingabeaufforderungsinformationen unter der Bedingung, dass die erste Nachbarzellen-Signalgüte erfolgreich gemessen wurde und der gewichtete Mittelwert den ersten Zugangsstandard erfüllt und die erste Nachbarzellen-Signalgüte einen zweiten Zugangsstandard erfüllt.

7. Verfahren nach Anspruch 6, wobei die erste Nachbarzellen-Signalgüte den zweiten Zugangsstandard wie folgt erfüllt:
die erste Nachbarzellen-Signalgüte erreicht einen Qualitätsschwellenwert des zweiten Zugangsstandards; oder
die erste Nachbarzellen-Signalgüte ist höher als die zweite Nachbarzellen-Signalgüte.

8. Verfahren nach Anspruch 1, wobei das Bestimmen der ersten Nachbarzellen-Signalgüte, die durch Messen der Nachbarzelle des ersten Zugangsnetzes erhalten wird, und das Bestimmen der zweiten Nachbarzellen-Signalgüte, die durch Messen der Nachbarzelle des zweiten Zugangsnetzes erhalten wird, umfassen:
Erhalten der ersten Nachbarzellen-Signalgüte durch Messen der Nachbarzelle des ersten Zugangsnetzes und Erhalten der zweiten Nachbarzellen-Signalgüte durch Messen der Nachbarzelle des zweiten Zugangsnetzes, wenn erkannt wird, dass eine Endgerätvorrichtung an das erste Zugangsnetz und das zweite Zugangsnetz angeschlossen wird und sich die Endgerätvorrichtung in einem Ruhezustand bewegt.

9. Verfahren nach einem der Ansprüche 1 bis 8, wobei:
eine erste Verbindung zwischen dem ersten Zugangsnetz und einem Kernnetz hergestellt wird; und
eine zweite Verbindung zwischen dem zweiten Zugangsnetz und dem Kernnetz hergestellt wird.

10. Verfahren nach einem der Ansprüche 1 bis 8, wobei:
das erste Zugangsnetz ein Zugangsnetz fünfter Generation, 5G, ist und das zweite Zugangsnetz ein Zugangsnetz vierter Generation, 4G, ist; oder
das erste Zugangsnetz ein Zugangsnetz nach neuem Funkstandard, NR (New Radio), ist und das zweite Zugangsnetz ein Zugangsnetz nach dem LTE (Long Term Evolution, Langzeitentwicklung) -Standard ist.

11. Vorrichtung für eine Benutzerschnittstellen, UI (User Interface), -Anzeige für ein Drahtlos-Kommunikationsnetz mit nicht eigenständiger Architektur, **dadurch gekennzeichnet, dass** es umfasst:
ein Bestimmungsmodul (601), das ausgelegt ist zum Bestimmen einer ersten Nachbarzellen-Signalgüte, die durch Messen einer Nachbarzelle eines ersten Zugangsnetzes erhalten wird, und Bestimmen einer zweiten Nachbarzellen-Signalgüte, die durch Messen einer Nachbarzelle eines zweiten Zugangsnetzes erhalten wird; und
ein Anzeigemodul (602), das ausgelegt ist zum Anzeigen, basierend auf der ersten Nachbarzellen-Signalgüte und der zweiten Nachbarzellen-Signalgüte, erster Eingabeaufforderungsinformationen für das erste Zugangsnetz oder zweiter Eingabeaufforderungsinformationen für das zweite Zugangsnetz auf der UI, wobei die erste Eingabeaufforderung eine erste Netzkennung des ersten Zugangsnetzes und erste Qualitätsinformationen zur ersten Nachbarzellen-Signalgüte umfasst und wobei die zweite Eingabeaufforderung eine zweite Netzkennung des zweiten Zugangsnetzes und zweite Qualitätsinformationen zur zweiten Nachbarzellen-Signalgüte umfasst.

12. Vorrichtung nach Anspruch 11, wobei das Anzeigemodul ausgelegt ist zum Anzeigen der ersten Eingabeaufforderungsinformationen unter der Bedingung, dass die erste Nachbarzellen-Signalgüte erfolgreich gemessen wurde und ein gewichteter Mittelwert der ersten Nachbarzellen-Signalgüte und der zweiten Nachbarzellen-Signalgüte einen ersten Zugangsstandard erfüllt.

13. Vorrichtung nach Anspruch 12, wobei das Anzeigemodul ferner ausgelegt ist zum Anzeigen der ersten Eingabeaufforderungsinformationen unter der Bedingung, dass die erste Nachbarzellen-Signalgüte erfolgreich gemessen wurde, der gewichtete Mittelwert der ersten Nachbarzellen-Signalgüte entspricht und die erste Nachbarzellen-Signalgüte einen zweiten Zugangsstandard erfüllt.

14. Endgerätevorrichtung (600), umfassend:
einen Speicher (620), der ein Computerprogramm speichert; und
einen Prozessor (610), der dafür ausgelegt ist, das im Speicher gespeicherte Computerprogramm aufzurufen und auszuführen, und dafür ausgelegt ist, das Verfahren nach einem der Ansprüche 1 bis 10 auszuführen.

15. Computerlesbares Speichermedium, das einen Computerprogrammcode speichert, der, wenn er auf einem Computer einer Vorrichtung nach einem der Ansprüche 11 bis 13 ausgeführt wird, dafür ausgelegt ist, das Verfahren nach einem der Ansprüche 1 bis 10 auszuführen.

## Revendications

1. Procédé réalisé par un dispositif pour un affichage d'interface d'utilisateur, UI, pour un réseau de communication sans fil présentant une architecture non autonome, **caractérisé en ce qu'**il comporte les étapes consistant à :
déterminer (401) une première qualité de signal de cellule voisine obtenue en mesurant une cellule voisine d'un premier réseau d'accès, et déterminer une seconde qualité de signal de cellule voisine obtenue en mesurant une cellule voisine d'un second réseau d'accès ; et
afficher (402) sur l'UI, d'après la première qualité de signal de cellule voisine et la seconde qualité de signal de cellule voisine, des premières informations d'invite relatives au premier réseau d'accès ou des secondes informations d'invite relatives au second réseau d'accès, la première invite comportant un premier identifiant de réseau du premier réseau d'accès et des premières informations de classe de qualité de la première qualité de signal de cellule voisine, et la seconde invite comportant un second identifiant de réseau du second réseau d'accès et des secondes informations de classe de qualité de la seconde qualité de signal de cellule voisine.

2. Procédé selon la revendication 1, l'affichage, d'après la première qualité de signal de cellule voisine et la seconde qualité de signal de cellule voisine, des premières informations d'invite relatives au premier réseau d'accès ou des secondes informations d'invite relatives au second réseau d'accès comportant :
l'affichage des premières informations d'invite à condition que la première qualité de signal de cellule voisine soit mesurée avec succès et qu'une moyenne pondérée de la première qualité de signal de cellule voisine et de la seconde qualité de signal de cellule voisine satisfasse à une première norme d'accès.

3. Procédé selon la revendication 2, comportant en outre :
l'affichage des secondes informations d'invite à condition que la moyenne pondérée ne satisfasse pas à la première norme d'accès.

4. Procédé selon la revendication 2, comportant en outre :
l'affichage des secondes informations d'invite à condition que la mesure de la première qualité de signal de cellule voisine échoue.

5. Procédé selon la revendication 2, l'affichage des premières informations d'invite à condition que la première qualité de signal de cellule voisine soit mesurée avec succès et que la moyenne pondérée de la première qualité de signal de cellule voisine et de la seconde qualité de signal de cellule voisine satisfasse à la première norme d'accès comportant :
l'affichage des premières informations d'invite à condition que la première qualité de signal de cellule voisine soit mesurée avec succès et que la moyenne pondérée de la première qualité de signal de cellule voisine et de la seconde qualité de signal de cellule voisine atteigne un seuil de qualité de la première norme d'accès.

6. Procédé selon la revendication 2, l'affichage des premières informations d'invite à condition que la première qualité de signal de cellule voisine soit mesurée avec succès et que la moyenne pondérée de la première qualité de signal de cellule voisine et de la seconde qualité de signal de cellule voisine satisfasse à la première norme d'accès comportant :
l'affichage des premières informations d'invite, à condition que la première qualité de signal de cellule voisine soit mesurée avec succès, que la moyenne pondérée satisfasse à la première norme d'accès, et que la première qualité de signal de cellule voisine satisfasse à une seconde norme d'accès.

7. Procédé selon la revendication 6, la première qualité de signal de cellule voisine satisfaisant à la seconde norme d'accès comme suit :
la première qualité de signal de cellule voisine atteint un seuil de qualité de la seconde norme d'accès ; ou
la première qualité de signal de cellule voisine est supérieure à la seconde qualité de signal de cellule voisine.

8. Procédé selon la revendication 1, la détermination de la première qualité de signal de cellule voisine obtenue en mesurant la cellule voisine du premier réseau d'accès et la détermination de la seconde qualité de signal de cellule voisine obtenue en mesurant la cellule voisine du second réseau d'accès comportant :
l'obtention de la première qualité de signal de cellule voisine en mesurant la cellule voisine du premier réseau d'accès, et l'obtention de la seconde qualité de signal de cellule voisine en mesurant la cellule voisine du second réseau d'accès, suite à la détection du fait qu'un dispositif terminal se rattache au premier réseau d'accès et au second réseau d'accès et que le dispositif terminal se déplace dans un état de repos.

9. Procédé selon l'une quelconque des revendications 1 à 8,
une première liaison étant établie entre le premier réseau d'accès et un réseau central ; et
une seconde liaison étant établie entre le second réseau d'accès et le réseau central.

10. Procédé selon l'une quelconque des revendications 1 à 8,
le premier réseau d'accès étant un réseau d'accès de cinquième génération, 5G, et le second réseau d'accès étant un réseau d'accès de quatrième génération, 4G ; ou
le premier réseau d'accès étant un réseau d'accès de nouvelle radio, NR, et le second réseau d'accès étant un réseau d'accès d'évolution à long terme, LTE.

11. Dispositif d'affichage d'interface d'utilisateur, UI, pour un réseau de communication sans fil présentant une architecture non autonome, **caractérisé en ce qu'**il comporte :
un module (601) de détermination, configuré pour déterminer une première qualité de signal de cellule voisine obtenue en mesurant une cellule voisine d'un premier réseau d'accès, et déterminer une seconde qualité de signal de cellule voisine obtenue en mesurant une cellule voisine d'un second réseau d'accès ; et
un module (602) d'affichage, configuré pour afficher sur l'UI, d'après la première qualité de signal de cellule voisine et la seconde qualité de signal de cellule voisine, des premières informations d'invite relatives au premier réseau d'accès ou des secondes informations d'invite relatives au second réseau d'accès, la première invite comportant un premier identifiant de réseau du premier réseau d'accès et des premières informations de classe de qualité de la première qualité de signal de cellule voisine, et la seconde invite comportant un second identifiant de réseau du second réseau d'accès et des secondes informations de classe de qualité de la seconde qualité de signal de cellule voisine.

12. Dispositif selon la revendication 11, le module d'affichage étant configuré pour afficher les premières informations d'invite à condition que la première qualité de signal de cellule voisine soit mesurée avec succès et qu'une moyenne pondérée de la première qualité de signal de cellule voisine et de la seconde qualité de signal de cellule voisine satisfasse à une première norme d'accès.

13. Dispositif selon la revendication 12, le module d'affichage étant en outre configuré pour afficher les premières informations d'invite, à condition que la première qualité de signal de cellule voisine soit mesurée avec succès, que la moyenne pondérée satisfasse à la première norme d'accès, et que la première qualité de signal de cellule voisine satisfasse à une seconde norme d'accès.

14. Dispositif terminal (600), comportant :
une mémoire (620), conservant un programme informatique ; et
un processeur (610), configuré pour appeler et exécuter le programme informatique conservé dans la mémoire et configuré pour exécuter le procédé selon l'une quelconque des revendications 1 à 10.

15. Support de stockage lisible par ordinateur, conservant un code de programme informatique qui, lorsqu'il est exécuté sur un ordinateur d'un dispositif selon l'une quelconque des revendications 11 à 13, est configuré pour exécuter le procédé selon l'une quelconque des revendications 1 à 10.
